# EUROPEAN PATENT APPLICATION

(11) **EP 0 720 372 A1**
(43) Date of publication of application: **03.07.1996**
(21) Application number: 94120951.2
(22) Date of filing: 30.12.1994
(51) Int. Cl.: H04N 7/26, H04N 7/50

(54) **Apparatus for parallel encoding/decoding of digital video signals**

(71) Applicant: DAEWOO ELECTRONICS CO., LTD, Jung-Gu, Seoul 100-095 (KR)
(72) Inventor: Kwon, Oh-Sang, Seongbuk-Ku, Seoul (KR)
(74) Representative: von Samson-Himmelstjerna, Friedrich R., Dipl.-Phys.

(57) **Abstract**

A novel encoding apparatus for encoding an input digital video signal in a compressed form comprises a control unit for counting the number of picture lines in each of the plurality of the video frame data, a switching block for dividing the video frame data into a multiplicity of subframes under the control of the control unit, a multiplicity of FIFO buffers for storing the divided video frame data, a multiplicity of encoders for compressing the video frame data, each of the encoders compressing each of the multiplicity of subframes, and a frame formatter for coupling the compressed video frame data.

Further, a novel decoding apparatus for decoding an encoded digital video signal in an encoded bit stream form includes a detector for detecting slice start codes from the encoded digital video signal and generating a slice start detection signal, a control unit for counting the number of the slice start codes in the encoded bit stream and for generating a control signal, a switching block for dividing the video frame data into a multiplicity of subframes, a multiplicity of FIFO buffers for storing the divided video frame data, a multiplicity of decoders for reproducing the original video image signal, each decoder reproducing each of the multiplicity of subframes, a frame formatter for coupling the reproduced original video image signals.

## Description

### Field of the Invention

The present invention relates to a video imaging system; and, more particularly, to an improved video encoding/decoding apparatus capable of carrying out a parallel processing.

### Description of the Prior Art

In various electronic/electrical applications such as high definition television and video telephone systems, an image signal may need be transmitted in a digitized form. When the image signal is expressed in a digitized form, there is bound to occur a substantial amount of digital data. Since, however, the available frequency bandwidth of a conventional transmission channel is limited, in order to transmit the image signal therethrough, the use of an image signal encoding apparatus becomes necessary to compress the substantial amounts of digital data.

Accordingly, most image signal encoding apparatus employ various compression techniques(or coding methods) built on the idea of utilizing or reducing spatial and/or temporal redundancies inherent in the input image signal.

Among the various video compression techniques, the so-called hybrid coding technique, which combines temporal and spatial compression techniques together with a statistical coding technique, is known to be most effective.

Most hybrid coding techniques employ a motion compensated DPCM(differential pulse code modulation), two-dimensional DCT(discrete cosine transform), quantization of DCT coefficients, and VLC(variable length coding). The motion compensated DPCM is a process of determining the movement of an object between a current frame and its previous frame, and predicting the current frame according to the motion flow of the object to produce a differential signal representing the difference between the current frame and its prediction. This method is described, for example, in Staffan Ericsson, "Fixed and Adaptive Predictors for Hybrid Predictive/Transform Coding", IEEE Transactions on Communications, COM-33, No. 12(December 1985); and in Ninomiya and Ohtsuka, "A Motion Compensated Interframe Coding Scheme for Television Pictures", IEEE Transactions on Communications, COM-30, No. 1(January 1982).

The two-dimensional DCT, which reduces or removes spatial redundancies between image data such as motion compensated DPCM data, converts a block of digital image data, for example, a block of 8x8 pixels, into a set of transform coefficient data. This technique is described in Chen and Pratt, "Scene Adaptive Coder", IEEE Transactions on Communications, COM-32, No. 3(March 1984). By processing such transform coefficient data with a quantizer, zigzag scanner and VLC, the amount of data to be transmitted can be effectively compressed.

Specifically, in the motion compensated DPCM, current frame data is predicted from previous frame data based on an estimation of the motion between the current and the previous frames. Such estimated motion may be described in terms of two dimensional motion vectors representing the displacement of pixels between the previous and the current frames.

In order to compress the image signals with the above mentioned technique, the use of a processor capable of carrying out a high speed processing becomes necessary, and this is usually achieved by employing a parallel processing technique. Generally, in the image signal encoding/decoding apparatus having the parallel processing capability, one video image frame area is divided into a plurality of subframes, and image data within the video image frame area is processed on a subframe-by-subframe basis.

However, to determine a motion vector for a search block in the current frame, a similarity calculation is performed between the search block of the current frame and each of a plurality of equal-sized candidate blocks included in a generally larger search region within a previous frame, wherein the size of the search block typically ranges between 8x8 and 32x32 pixels. Therefore, the search region containing a boundary portion of any subframe also includes a boundary portion of a neighboring subframe. Accordingly, the motion estimation carried out by each encoder requires a memory access that exceeds the boundary of the previous frame memory associated with the particular encoder, or a shared memory system with a multiple random access capability.

### Summary of the Invention

It is, therefore, a primary object of the present invention to provide an improved video encoding/decoding apparatus capable of carrying out a parallel processing, without using a memory access that exceeds the boundary of a previous frame memory associated with the particular encoder/decoder, or a shared memory system with a multiple random access capability.

In accordance with one aspect of the present invention, there is provided an apparatus for encoding an input digital video signal in a compressed form for transmission, wherein the input digital video signal includes a plurality of video frame data, each video frame data having a number of picture lines, which comprises: control means for counting the number of picture lines in each of the plurality of the video frame data, and generating a control signal in response to the counted number of the picture lines; means for dividing video frame data into a multiplicity of subframes in response to the control signal; a multiplicity of FIFO buffers for storing the the divided video frame data; a multiplicity of encoders for compressing the video frame data, each of the encoders compressing each of the multiplicity of subframes; and means for coupling the compressed video frame data.

Further, in accordance with another aspect of the present invention, there is disclosed an apparatus for decoding an encoded digital video signal in an encoded bit stream form for the reproduction of an original video image signal, wherein the encoded digital video signal includes a plurality of video frame data, each of the plurality of video frame data having a number of slice start codes representing a start of each slice therein, which comprises: means for detecting the slice start codes from the encoded digital video signal and generating a slice start detection signal; control means for counting the number of the slice start codes in the encoded bit stream in response to the slice start detection signal, and for generating a control signal in response to the counted number of the slice start codes; means for dividing video frame data into a multiplicity of subframes in response to the control signal; a multiplicity of FIFO buffers for storing the divided video frame data; a multiplicity of decoders for reproducing the original video image signal, each decoder reproducing each of the multiplicity of subframes; means for coupling the reproduced original video image signal.

### Brief Description of the Drawings

The above and other objects and features of the present invention will become apparent from the following description of preferred embodiments given in conjunction with the accompanying drawings, in which:
Fig. 1A is a schematic representation of a video image frame area;
Fig. 1B shows a diagram illustrating a divided video image frame area;
Fig. 2 represents a block diagram of the inventive encoding apparatus comprising a plurality of encoders;
Fig. 3 presents a detailed block diagram illustrating one of the identical encoders shown in Fig. 2.
Fig. 4 depicts a block diagram of the inventive decoding apparatus comprising a plurality of decoders; and
Fig. 5 describes a detailed block diagram illustrating one of the identical decoders shown in Fig. 4.

### Detailed Description of the Preferred Embodiments

The present invention provides for the communication of high definition television(HDTV) signals from a transmitter location to a population of receivers. At the transmitter of an "encoder" end of the communication link, digital video signals for successive frames of a television picture are broken down into subframes for processing by multiple processors. Each processor includes an encoder dedicated to the encoding of video data from a particular subframe.

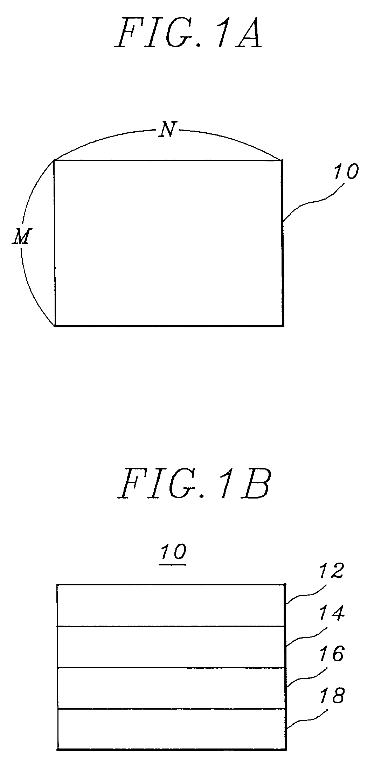

A video image frame area 10 is illustrated in Fig. 1A. The total frame area encompasses M horizontal picture lines, each picture line containing N pixels. For example, a single HDTV frame comprises 960 picture lines, each picture line including 1408 pixels. In other words, a single HDTV frame comprises 60 slices, each slice including 16 horizontal picture lines.

In accordance with the present invention, the video image frame area is divided into a plurality of subframes, e.g., subframes 12, 14, 16, 18 as illustrated in Fig. 1B.

In order to process the plurality of subframes, a processor is assigned to each subframe for compressing the digital data bounded by the subframe in video frames. Data redundancies between a current video frame and one or more of its prior video frames is reduced using a motion estimation/compensation technique. By distributing the processing of a video image frame area among a plurality of processors, the transmission of HDTV signals can be achieved using encoders that are essentially the same as those used for regular television, e.g., NTSC, signal transmission.

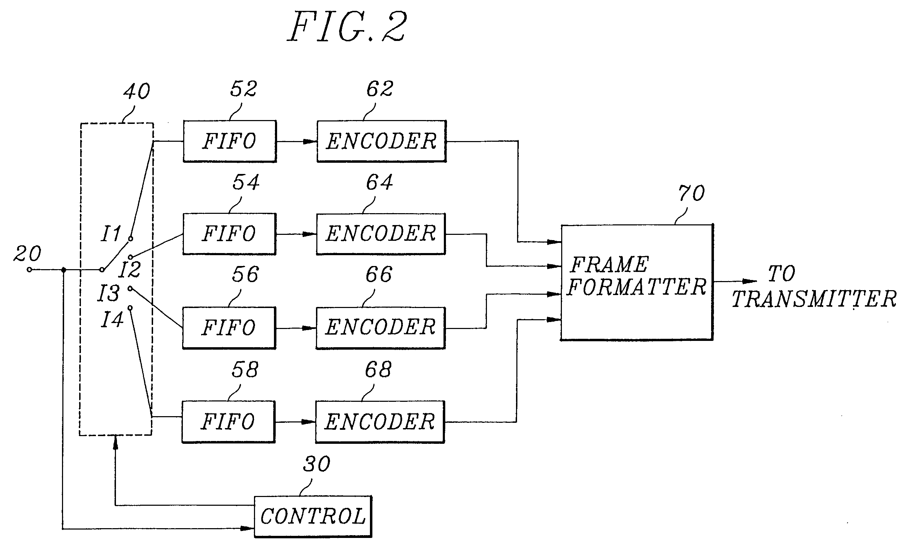

Referring to Fig. 2, there is shown a preferred embodiment of the apparatus for the parallel encoding of video image signals in accordance with the present invention.

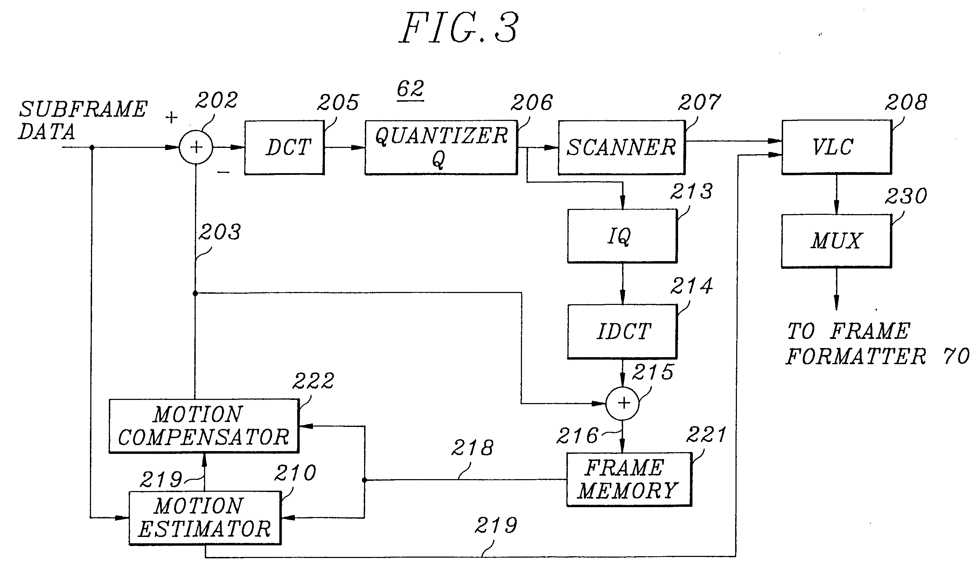

As shown in Fig. 2, an input digital video signal to be processed is inputted via terminal 20 to a control unit 30 and a switching block 40. The input digital video signal is read, on a block-by-block basis, from an input memory(not shown), wherein each frame of video signals is stored as successive blocks of pixel data for the processing thereof on a block-by-block basis. The block size of the input digital video signal typically ranges between 8x8 and 32x32 pixels. The input digital video signal includes a plurality of video frame data, each of the video frame data having a number of picture lines and occupying a video image frame area. The control unit 30 counts the number of picture lines in the video frame data, and generates a control signal to the switching block 40, in response to the counted number of the picture lines. Whenever the counted number of the picture lines becomes a predetermined value, e.g., 240, the control signal for alternately switching the input digital video signal among I1, I2, I3, I4 is generated by the control unit 30, thereby dividing each frame of the incoming digital video signal into the plurality of subframes and storing them in a plurality of first-in first-out(FIFO) buffers 52, 54, 56, 58. The FIFO buffers output the subframe data to a corresponding plurality of encoders 62, 64, 66, 68, each of which is substantially identical each other. Each of the encoders is dedicated to the processing of video image data bounded by a particular subframe. More detailed description of the encoders is given hereinbelow with reference to Fig. 3. The processed subframe data from the encoders 62, 64, 66, 68 is provided to a frame formatter 70, and combined to form an encoded frame data. The encoded frame data is then provided to a transmitter(not shown) for the transmission thereof.

Referring now to Fig. 3, there is depicted a detailed block diagram illustrating one of the identical encoders, e.g., the encoder 62 shown in Fig. 2. The subframe data from the FIFO buffer 52 is fed to a subtractor 202 and a motion estimator 210 as current subframe data. A block of predicted subframe data 203 from a motion compensator 222 is subtracted from the search block of the current subframe data at the subtractor 202; and the resultant data, i.e., difference pixel data, is dispatched to a discrete cosine transform(DCT) circuit 205, wherein a block of difference pixel data is encoded into a set of transform coefficients. The transform coefficients are then quantized into a set of quantized DCT coefficients at a quantizer 206. Thereafter, the quantized DCT coefficients are transmitted via two signal paths: one that leads toward a scanner 207 and then to a variable length coding(VLC) circuit 208, wherein the quantized DCT coefficients are coded by using, for example, a combination of run-length and variable length coding thereby providing VLC coded subframe data to a multiplexer circuit 230; and the other to an inverse quantizer(IQ) 213 and then to an inverse discrete cosine transform(IDCT) circuit 214, wherein the quantized DCT coefficients are converted back into reconstructed difference pixel data by inverse quantization and inverse transformation, respectively. The reconstructed difference pixel data and predicted data from the motion compensator 222 are combined at an adder 215 to provide reconstructed current subframe data to be written onto a frame memory 221.

The current subframe data and the reconstructed previous subframe data 218 from the frame memory 221 are processed to determine motion vectors at the motion estimator 210. The motion vector 219 is applied to the motion compensator 222, wherein the predicted data, i.e., the candidate block data, corresponding to the motion vector 219 is retrieved from the frame memory 221 on a block-by-block basis and provided to the subtractor 202 and the adder 215 for further processing. The motion vector 219 is also applied to the VLC circuit 208 and coded by using VLC. The VLC coded subframe data and the motion vector from the VLC circuit 208 are fed to the multiplexer circuit 230 and transmitted to the frame formatter 70 shown in Fig. 2.

Specifically, in the motion estimator 210, to determine the motion vector for a search block in the current subframe, a similarity calculation is performed between the search block of the current subframe and each of a plurality of equal-sized candidate blocks included in a generally larger search region within a previous subframe. In accordance with the present invention, the motion vector 219 is determined by motion estimation only at the search region within each of the divided subframes.

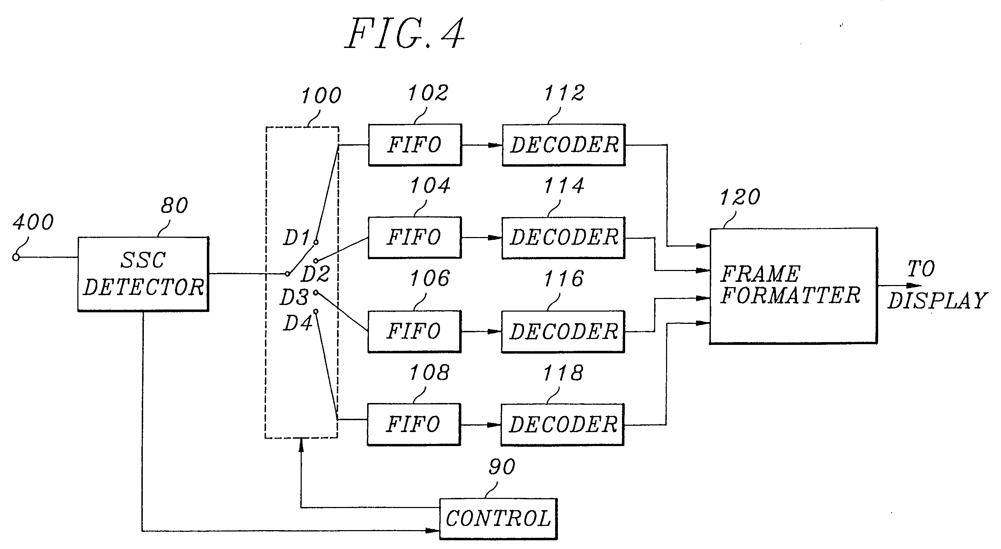

Referring to Fig. 4, there is shown an embodiment of the apparatus for the parallel decoding of variable length encoded video image signals in accordance with the present invention.

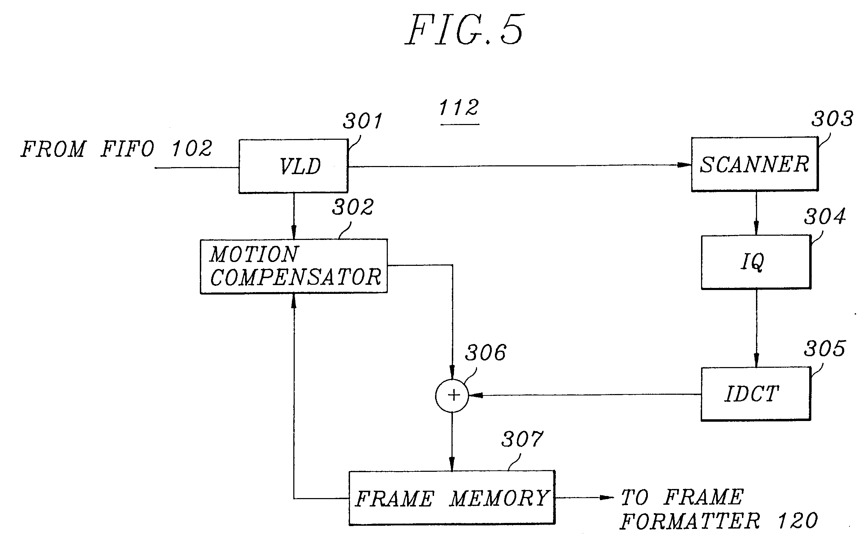

An encoded digital video signal received from the encoding apparatus of Fig. 2 is inputted via a terminal 400 to a slice start code(SSC) detector 80. The encoded digital video signal includes a plurality of video frame data, wherein each of said video frame data occupying a video image frame area has variable length coded transform coefficients, motion vectors and a number of SSCs, each SSC representing a start of a slice included in the encoded bit stream. The SSC detector 80 detects a slice start codes from the encoded digital video signal and generates a slice start detection signal to the control unit 90 which serves to control a switching block 100 and a multiplexer circuit 120. The control unit 90 counts the number of SSCs in response to the slice start detection signal provided from the SSC detector 80. Whenever the counted number of the SSCs reaches a predetermined value, e.g., 15 a first control signal for alternately switching the encoded digital video signal supplied from the SSC detector 80 among D1, D2, D3, D4 is generated by the control unit 90, thereby dividing each frame of the incoming encoded image signal into a plurality of subframes and storing them in the plurality of FIFO buffers 102, 104. 106, 108. The FIFO buffers output the subframe data to a corresponding plurality of decoders 112, 114, 116, 118, each of the decoders being identical each other. Each decoder processes video image data bounded by a corresponding subframe. In other words, decoder 112 will process the subframe data encoded by the encoder 62 shown in Fig. 2. Similarly, decoders 114, 116, 118 will process the video image data bounded by the subframes processed by encoders 64, 66, 68, respectively. More detailed description of the decoders is given hereinbelow with reference to Fig. 5. Each of the decoders is dedicated to the processing of video image data bounded by a particular subframe. The decoded subframe data from the decoders is applied to a frame formatter 120 and combined therein to form a single data stream representing the original video image signals to be, e.g., displayed on a display unit (not shown).

Referring now to Fig. 5, there is shown a detailed block diagram illustrating one of the identical decoders, e.g., the decoder 112 shown in Fig. 4. The decoders 112, 114, 116, 118 shown in Fig. 4 are made of identical elements, each element serving a same function.

As shown in Fig. 5, video image data bounded by a particular subframe is provided from the FIFO buffer 102 (shown in Fig. 4) to a variable length decoding(VLD) circuit 301. The VLD circuit 301 decodes the set of variable length coded transform coefficients and the motion vectors to send the transform coefficient data to an inverse zigzag scanner 303 and the motion vector data to a motion compensator 302. The VLD circuit 301 is basically a look-up table: that is, in the VLD circuit 301, a plurality of code sets is provided to define respective relationships between variable length codes and their run-length codes or motion vectors.

In the inverse zigzag scanner 303, the quantized DCT coefficients are reconstructed to provide an original block of quantized DCT coefficients. A block of quantized DCT coefficients is converted into a set of DCT coefficients in an inverse quantizer(IQ) 304 and fed to an inverse discrete cosine transform(IDCT) circuit 305 which transforms the set of DCT coefficients into a set of difference data between a block of the current subframe and its corresponding block of the previous subframe. The difference data from IDCT 305 is then sent to an adder 306.

In the meanwhile, the variable length decoded motion vector from VLD circuit 301 is fed to the motion compensator 302. The motion compensator 302 extracts corresponding pixel data from the previous subframe stored in a frame memory 307 based on the motion vector and applies the corresponding pixel data to the adder 306. The corresponding pixel data derived from the motion compensator 302 and the pixel difference data from the IDCT 305 are summed up at the adder 306 to constitute representative image data of a given block of the current subframe and written onto the frame memory 307 and transmitted to the frame formatter 120 shown in Fig. 4.

While the present invention has been described with respect to certain preferred embodiments only, other modifications and variations may be made without departing from the spirit and scope of the present invention as set forth in the following claims.

## Claims

1. An apparatus for encoding an input digital video signal in a compressed form for transmission, wherein the input digital video signal includes a plurality of video frame data, each video frame data having a number of picture lines, which comprises:
control means for counting the number of picture lines in each of the plurality of the video frame data, and generating a control signal in response to the counted number of the picture lines;
means for dividing video frame data into a multiplicity of subframes in response to the control signal;
a multiplicity of FIFO buffers for storing the divided video frame data;
a multiplicity of encoders for compressing the video frame data, each of the encoders compressing each of the multiplicity of subframes; and
means for coupling the compressed video frame data.

2. An apparatus for decoding an encoded digital video signal in an encoded bit stream form for the reproduction of an original video image signal, wherein the encoded digital video signal includes a plurality of video frame data, each of the plurality of video frame data having a number of slice start codes representing a start of each slice therein, which comprises:
means for detecting the slice start codes from the encoded digital video signal and generating a slice start detection signal;
control means for counting the number of the slice start codes in the encoded bit stream in response to the slice start detection signal, and for generating a control signal in response to the counted number of the slice start codes;
means for dividing video frame data into a multiplicity of subframes in response to the control signal;
a multiplicity of FIFO buffers for storing the divided video frame data;
a multiplicity of decoders for reproducing the original video image signal, each decoder reproducing each of the multiplicity of subframes;
means for coupling the reproduced original video image signal.
